# FASCICULE DE BREVET EUROPEEN

(11) **EP 3 023 332 B1**
(45) Date de publication et mention de la délivrance du brevet: **19.07.2017**
(21) Numéro de dépôt: 15198194.1
(22) Date de dépôt: 15.02.2011
(51) Int. Cl.: B64F 1/22

(54) **TRACTEUR D'AVION**
FLUGZEUG-SCHLEPPFAHRZEUG
AIRCRAFT TRACTOR

(30) Priorité: 16.02.2010 FR 1051078; 27.04.2010 FR 1053232
(43) Date de publication de la demande: 25.05.2016
(62) Demande divisionnaire de: 11708329.5
(73) Titulaire: Israel Aerospace Industries Ltd., 70100 Lod (IL)
(72) Inventeur: Decoux, Laurent, 79420 Reffannes (FR); Enault, Eric, 79420 Reffannes (FR); Vermalle, Nicolas, 79420 Reffannes (FR)
(74) Mandataire: Hirsch & Associés

(56) Documents cités:
- EP-A1- 0 126 386
- WO-A1-85/00790
- WO-A1-87/06910
- WO-A1-90/14266
- DE-A1- 4 023 023
- DE-A1- 4 102 861
- US-A- 5 302 074

## Description

La présente invention concerne un tracteur d'avion utilisé dans les aéroports pour remorquer les avions, et elle concerne plus précisément un tracteur d'avion comportant un dispositif de préhension, un procédé de préhension du train avant d'un avion utilisant un tel tracteur, et un procédé pour tracter un avion.

On utilise maintenant des tracteurs qui sont équipés d'un dispositif de préhension permettant de soulever le train avant de l'avion, afin de le remorquer, le train étant comme on sait, constitué d'une paire de roues comprenant un pneu chacune, la paire de roue étant fixée à l'extrémité d'une jambe pointant vers le bas à partir du nez de l'appareil. Un exemple de tracteur appartenant à l'art antérieur est montré dans le document EP 0 126 386. Un dispositif de préhension connu pour tracteur comporte un bras longitudinal articulé qui s'étend en entrée du système de préhension, et qui est destiné à se placer à l'arrière du train avant de l'avion. Ce bras longitudinal se referme sur les roues de manière à enserrer le train avant. A l'opposé du bras longitudinal, une lame en forme de pelle est fixée transversalement au tracteur légèrement au dessus du sol, et elle est susceptible de pivoter sous l'action d'un vérin. La lame permet donc de soulever les roues avant de l'avion, immobilisées contre les parois du bras longitudinal et de la lame en forme de pelle. Un tel dispositif est utilisé sur un tracteur de type tracteur sans barre de traction (ou « towbarless » en anglais) ; par exemple, un tracteur modèle TPX de la marque TLD (TM).

Des dispositifs similaires existent. Par exemple, on connaît des systèmes où le bras longitudinal articulé peut être remplacé par des portillons articulés qui sont destinés à se placer de part et d'autre du train avant de l'avion. Le document WO/2008/139437 présente un tel système.

On utilise aujourd'hui des tracteurs équipés de tels dispositifs pour effectuer des opérations de roulage d'avion. Deux types d'opérations de roulage sont couramment effectués. Il existe tout d'abord une opération dite de « poussée » (ou « push-back » en anglais) qui consiste à éloigner des avions chargés en passagers (ou frêt) et en carburant des passerelles et autres installations fixes dans le but de les mettre en position de roulage autonome. Il existe ensuite une opération dite de «remorquage de maintenance» (ou «maintenance towing» en anglais) qui consiste à déplacer à vide un avion vers un hangar où sont effectuées des opérations de maintenances et d'entretien de l'avion.

Dans tous les autres cas où l'avion procède à une opération de roulage, ce dernier est en position de roulage autonome ; il se déplace par ses propres moyens, c'est-à-dire grâce à la poussée de ses réacteurs. En particulier, l'avion est en position de roulage autonome durant la phase où il roule en direction de la piste d'envol (phase également connue sous le terme anglais de «taxiing out») et/ou phase de retour. La conduite de l'avion est dans ce cas sous la responsabilité du pilote qui ajuste la vitesse de l'avion uniquement en utilisant les freins principaux de l'avion, la poussée fournie par les réacteurs restant constante. Durant cette phase où l'avion roule en direction de la piste d'envol, la vitesse de l'avion est d'environ 20 noeuds, c'est-à-dire une vitesse d'environ 37 kilomètres par heure. La durée moyenne d'attente d'un avion avant qu'il puisse décoller est de 20 minutes, mais ce délai peut parfois dépasser 1 heure. Et durant toute cette attente, les réacteurs continuent de tourner et de consommer du carburant.

On a imaginé de substituer l'utilisation des réacteurs par un tracteur lors de cette phase dite de «taxiing out». L'opération est alors désignée en anglais sous le terme «dispatch towing». Des essais ont été effectués en ce sens, et on a pu constater que la consommation en carburant du tracteur est très largement inférieure à celle qu'auraient consommée les réacteurs de l'avions si ceux-ci avaient été utilisés.

En dépit de cette économie de carburant, les essais ont été jugés inacceptables pour les raisons suivantes. Tout d'abord, les tracteurs existant ont une vitesse insuffisante. Les aéroports sont surchargés et ralentir l'acheminement des avions vers la piste d'envol est inconcevable. Ensuite, les dispositifs actuels de préhension ne sont pas adaptés à un contexte opérationnel où il est important qu'un problème puisse être résolu rapidement. En particulier, les mécanismes actuels ne permettent pas de décharger l'avion rapidement dans le cas où le tracteur tombe en panne, ce qui entraîne un ralentissement voire un blocage des autres avions. Tout retard est extrêmement coûteux pour les compagnies aériennes. Ensuite, les charges et fatigues induites sur le train avant de l'avion sont trop élevées durant la phase dite de « dispatch towing ». La durée de vie du train avant d'atterrissage est ainsi fortement réduite. Pour cette raison, des constructeurs d'avions ont limité le nombre de manoeuvres pouvant être réalisées de cette manière, d'autres allant jusqu'à interdire qu'un tracteur effectue cette opération de « dispatch towing ». Les compagnies ont en conséquent renoncé à l'utilisation de tracteur pour la phase dite de « taxiing ». En plus de ces considérations économiques et techniques, il existe aussi des considérations juridiques. La responsabilité est actuellement transférée au pilote à l'allumage des réacteurs, et le conducteur du tracteur est alors déchargé de toute responsabilité. La responsabilité de conduire un avion sur la piste d'envol incomberait alors au conducteur du tracteur, ce qui n'est pas envisageable pour les compagnies aériennes et les gestionnaires d'aéroports.

Le document WO/2008/139440 présente un tracteur d'avion permettant de réaliser la phase de taxiing en permettant au pilote de contrôler la direction du tracteur et sa vitesse. Cependant, ce tracteur d'avion comprend un système de préhension complexe ; de nombreux actionneurs sont nécessaires pour installer le train avant de l'avion sur le tracteur. Les étapes de chargement/déchargement de l'avion sont donc trop longues et complexes. De plus, le nombre important d'actionneurs rend difficile et très long le déchargement de l'avion en cas de panne du tracteur.

L'invention vise à éviter ces inconvénients en proposant un tracteur d'avion comprenant un dispositif de préhension permettant d'améliorer le chargement et le déchargement de l'avion sur le tracteur, et en particulier un dispositif de préhension adapté pour tracter un avion vers une piste d'envol.

Pour cela, il est proposé un procédé, selon la revendication 1, pour tracter un avion au moyen d'un tracteur d'avion du type par préhension du train avant de l'avion, comprenant :
- un châssis ;
- des modules de roues en liaison avec le châssis, chaque module de roues comprenant au moins un actionneur pour induire un mouvement vertical du module par rapport au châssis ;
- une plateforme de préhension du train avant d'un avion, la plateforme ayant avec le châssis une liberté de mouvement en translation sensiblement circulaire ;
- un moyen d'actionnement reliant la plateforme et le châssis, ledit moyen d'actionnement constituant en outre un moyen d'amortissement du libre mouvement de la plateforme par rapport au châssis.

Le tracteur selon l'invention peut comprendre en outre au moins l'une des caractéristiques suivantes :
- au moins un portillon destiné à s'opposer à une force exercée sur au moins une roue du train avant de l'avion par la plateforme de préhension ;
- la plateforme de préhension comporte un dispositif de verrouillage d'au moins une roue du train avant de l'avion ;
- le dispositif de verrouillage de ladite au moins une roue du train avant est installé sur une tourelle disposée sur la plateforme de préhension, la tourelle étant libre en rotation autour d'un axe sensiblement vertical par rapport à la plateforme de préhension ;
- le dispositif de verrouillage de ladite au moins une roue comprend :
   - une butée de roue du train avant de l'avion ;
   - un dispositif de serrage pour maintenir la roue du train avant de l'avion contre la butée ;
- le dispositif de serrage comprend une plaque de serrage reliée à un triangle actionné par un vérin ;
- la plaque de serrage est escamotable en absence d'une roue d'avion sur la plateforme ;
- la butée présente un emplacement réglable ;
- l'actionneur de chaque module de roues est un vérin hydraulique ;
- le vérin du dispositif de serrage est un vérin hydraulique ;
- le moyen d'amortissement et d'actionnement constitue un capteur de mouvement relatif entre la plateforme et le châssis ;
- la plateforme présente un socle relié au châssis par des tirants verticaux ;
- un actionneur pour induire une inclinaison du socle de la plateforme par rapport à un plan horizontal ;
- les tirants verticaux présentent des longueurs ajustables et/ou des points d'attache au châssis ajustables ;
- chaque module de roues présente un angle de rotation respectif par rapport à un axe longitudinal du tracteur et autour d'un axe de rotation sensiblement vertical au châssis du tracteur ;
- la tourelle comporte au moins un capteur mesurant un déplacement angulaire de la tourelle par rapport à la plateforme de préhension, et chaque angle de rotation respectif est déterminé en fonction du déplacement angulaire de la tourelle mesuré ;

Il est également dévoilé, mais pas partie de l'invention, un procédé de préhension du train avant d'un avion utilisant un tracteur d'avion comprenant :
- un châssis ;
- des modules de roues en liaison avec le châssis, chaque module de roues comprenant au moins un actionneur pour induire un mouvement vertical du module par rapport au châssis;
- une plateforme de préhension du train avant d'un avion, la plateforme étant mobile en translation sensiblement circulaire par rapport au châssis, la plateforme passant d'une position rétractée à une position de préhension en passant par une position d'équilibre ;
- un moyen d'amortissement et d'actionnement reliant la plateforme et le châssis.
le procédé comprenant les étapes de :
- actionner le moyen d'amortissement et d'actionnement pour placer la plateforme de préhension dans la position rétractée;
- descendre le châssis;
- déplacer le tracteur de manière à placer la plateforme de préhension rétractée en contact avec au moins une roue du train avant de l'avion ;
- actionner le moyen d'amortissement et d'actionnement pour déplacer la plateforme de préhension de sa position rétractée vers sa position de préhension tout en ajustant la hauteur du châssis en commandant les actionneurs d'au moins deux modules de roues de manière à glisser la plateforme de préhension sous la roue ;
- remonter le châssis;
- ramener la plateforme dans sa position d'équilibre.

Le procédé de préhension du train avant d'un avion utilisant un tracteur d'avion peut comprendre en outre au moins l'une des caractéristiques suivantes :
- une étape consistant à fermer un portillon du tracteur lorsque la plateforme de préhension est en contact avec ladite au moins une roue du train avant de l'avion ;
- une étape consistant à ouvrir le portillon du tracteur lorsque le châssis remonte ;
- lorsque la plateforme de préhension a été glissée sous la roue, le procédé comprend en outre une étape consistant à déplacer le tracteur pour amener ladite au moins une roue sur un dispositif de verrouillage ;
- des étapes consistant à :
   - régler l'emplacement d'une butée en fonction du type d'avion et/ou du type de roue ;
   - amener ladite au moins une roue sur le dispositif de verrouillage contre la butée ;
   - amener une plaque de serrage contre la roue pour le maintenir contre la butée ;
- une étape consistant à incliner la plateforme par rapport à un plan horizontal.

Il est aussi proposé un procédé pour tracter un avion comprenant les étapes de :
- charger l'avion sur un tracteur suivant le procédé de préhension du train avant d'un avion utilisant un tracteur d'avion ;
- faire rouler le tracteur à vitesse constante ;
- réguler la vitesse du tracteur en fonction de l'effort mesuré par le moyen d'amortissement et d'actionnement.

Le procédé pour tracter un avion peut comprendre en plus au moins une des caractéristiques suivantes :
- vitesse du tracteur est contrôlée lorsque l'effort mesuré dépasse un niveau de seuil dynamiquement déterminé ;
- la plateforme du tracteur comprend une tourelle recevant ladite au moins une roue du train avant de l'avion, la tourelle étant libre en rotation autour d'un axe sensiblement vertical par rapport à la plateforme de préhension, la direction du tracteur étant modifiée en fonction de la rotation de la tourelle par rapport à la plateforme de préhension ;
- la rotation de la tourelle est induite par un mouvement de rotation de l'avant train ;
- le tracteur comprenant des modules de roues en liaison avec le châssis, chaque modules de roues pouvant effectuer une rotation suivant un axe de rotation sensiblement vertical au châssis du tracteur, dans lequel chaque module de roues a sa propre rotation et l'axe longitudinal de l'avion est confondu avec l'axe longitudinal du tracteur.

D'autres caractéristiques et avantages de l'invention apparaîtront à la lecture de la description détaillée qui suit des modes de réalisation de l'invention, donnés à titre d'exemple uniquement et en références aux dessins qui montrent :
- FIG. 1, une vue schématique de côté d'un tracteur d'avion selon l'invention ;
- FIG. 2, une vue schématique de côté du système de préhension selon l'invention ;
- FIG. 3, une vue schématique en perspective de l'arrière d'un tracteur d'avion selon l'invention ;
- FIG. 4, une vue schématique en perspective du système de préhension selon l'invention ;
- FIG. 5, une vue schématique de haut du système de préhension selon l'invention ;
- FIG. 6-23, des étapes d'un procédé de préhension du train avant d'un avion selon l'invention ;
- FIG. 24, une vue schématique d'un tracteur d'avion tractant un avion selon l'invention ;
- FIG. 25, un ordinogramme d'un procédé pour tracter un avion.

Le tracteur comprend un châssis, ainsi que des modules de roues en liaison avec le châssis. Chaque module de roues comprend au moins un actionneur pour induire un mouvement vertical du module par rapport au châssis. Ainsi, il est possible de faire monter ou descendre le châssis par rapport à un plan de roulage. Le tracteur comprend également une plateforme de préhension du train avant d'un avion qui a avec le châssis une liberté (sensiblement en translation circulaire, c'est-à-dire que tous les points de la plateforme ont des trajectoires qui sont des cercles de même rayon mais de centres différents). Ainsi, grâce à cette liberté en translation sensiblement circulaire de la plateforme par rapport au châssis, la plateforme conserve un angle sensiblement constant par rapport au châssis du tracteur. Ainsi, la plateforme de préhension peut se déplacer suivant un mouvement pendulaire par rapport au châssis du tracteur. En d'autres termes, la plateforme peut rester sensiblement parallèle avec un plan horizontal du tracteur ou être inclinée par rapport à l'horizontal et conserver sensiblement la même inclinaison lors de son mouvement relativement au tracteur. Le tracteur comprend aussi un moyen d'amortissement et d'actionnement reliant la plateforme et le châssis. Notamment, le moyen d'actionnement constitue un moyen d'amortissement du libre mouvement en translation circulaire de la plateforme de préhension par rapport au châssis. Ce moyen d'amortissement et d'actionnement permet avantageusement de modifier le positionnement de la plateforme par rapport au châssis, mais également de capter un mouvement relatif de cette même plateforme par rapport au châssis.

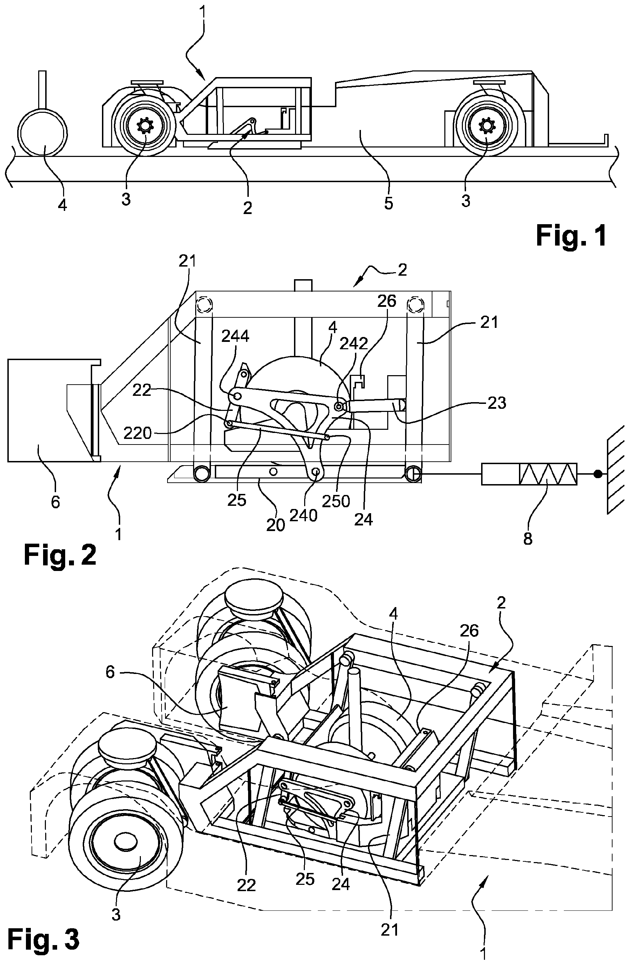

La FIG. 1 est un schéma d'une vue de côté d'un tracteur d'avion du type employé dans l'invention. Le tracteur d'avion 1 comprend un châssis 5 qui est en liaison avec quatre modules de roues 3. Seuls sont visibles sur la figure les deux modules de roues situés sur un côté du véhicule.

Les modules de roue peuvent effectuer une rotation dans un sens ou dans l'autre suivant un axe de rotation sensiblement vertical au châssis du tracteur.

Chaque module de roues comprend au moins un actionneur pour induire un mouvement vertical du module par rapport au châssis. En pratique, l'actionneur est un vérin, par exemple un vérin hydraulique, disposé de part et d'autre de deux bras articulés l'un par rapport à l'autre qui assurent la liaison du module de roues au châssis. L'ensemble bras articulés, actionneur, et roues forme un module de roue. L'actionneur fournit la force nécessaire pour régler de manière fine l'angle formé entre les deux bras articulés. Le mouvement vertical de chaque module de roues par rapport au châssis peut se faire de manière indépendante par rapport aux autres modules de roues.

Le nombre de modules de roues que comporte un tracteur peut varier. De préférence, le nombre de modules de roues est un nombre pair ; par exemple le tracteur d'avion peut avoir 4 ou 6 modules de roues. De plus, chaque module de roue peut comprendre une ou plusieurs roues. Par exemple, chacun des modules de roues 3 représentés sur la FIG. 3 comprennent deux roues.

Le tracteur d'avion 1 représenté sur FIG. 1 comprend également un système de préhension 2 du train avant d'un avion 4 qui est détaillé sur la FIG. 2.

La FIG. 2 montre un système de préhension. Le système de préhension du train avant 4 d'un avion comprend une plateforme de préhension 20 qui a une liberté en translation sensiblement circulaire avec le châssis, c'est-à-dire que tous les points de la plateforme ont des trajectoires qui sont des cercles de même rayon mais de centres différents. Ainsi, de part la liberté en translation sensiblement circulaire de la plateforme par rapport au châssis, la plateforme conserve un angle sensiblement constant avec un plan horizontal formé par le châssis du tracteur.

En pratique, la plateforme de préhension 20 est mise en relation avec le châssis 1 du tracteur à l'aide de tirants verticaux 21 reliés au châssis. Les tirants sont fixés respectivement à la plateforme et au châssis suivant une liaison rotule de sorte que la plateforme a une liberté en translation sensiblement circulaire avec le châssis. Quatre tirants verticaux sont par exemple utilisés dans la FIG. 3. Le nombre de tirant peut être plus important ou moins important ; par exemple 6 tirants. De préférence, le nombre de tirants est un nombre pair. Sur les figures, les tirants verticaux sont sensiblement de même longueur, et leur point d'accroche au châssis situé à la même hauteur, ce qui assure que le plan de préhension et le châssis soient sensiblement parallèles.

Selon un mode de réalisation, le socle de la plateforme de préhension 20 peut être inclinée par rapport à un plan horizontal, par exemple lorsque le tracteur est utilisé pour un avion présentant un train avant avec une jambe inclinée par rapport à un axe vertical - cas des Airbus A320 par exemple. La plateforme de préhension 20 peut être inclinée par action sur les tirants verticaux 21. Par exemple, la longueur des tirants peut être ajustée afin de monter ou descendre l'avant ou l'arrière de la plateforme 20 et lui donner ainsi l'angle nécessaire avec le plan horizontal. A cet effet, au moins certains des tirants verticaux 21 peuvent être constitués de vis à billes, de vérins hydrauliques ou associés à une crémaillère. Plutôt que d'ajuster la longueur des tirants verticaux, on peut également envisager d'ajuster la hauteur de leur point d'attache au châssis 5 du tracteur afin de créer l'angle d'inclinaison, par exemple en fixant une extrémité des tirants à une came ou un vérin. Une combinaison de ces deux modes de réalisation peut également être envisagée.

La FIG. 2 montre également un moyen d'amortissement et d'actionnement 8 reliant la plateforme et le châssis. Ce moyen d'amortissement et d'actionnement 8 permet de manière avantageuse de contrôler la position relative de la plateforme par rapport au châssis pendant les opérations de chargement et de déchargement de l'avion. En particulier, le moyen d'amortissement et d'actionnement 8 permet de contrôler et de commander en translation la position de plateforme de préhension, de sorte qu'il est possible de provoquer un glissement de la plateforme 20 sous les roues du train avant de l'avion pendant une opération de chargement. Inversement, lors d'une opération de déchargement, il est possible de provoquer un retrait de la plateforme 20 afin de libérer les roues du train avant de l'avion de la plateforme. En outre, le moyen d'amortissement et d'actionnement 8 permet d'amortir tout mouvement relatif de l'avion par rapport au tracteur, lorsque l'avion est chargé sur le tracteur, et plus précisément sur la plateforme de préhension 20 du tracteur. Notamment, le moyen d'amortissement et d'actionnement 8 permet d'amortir le libre mouvement de translation circulaire de la plateforme de préhension 20 avec le châssis du tracteur ; autrement dit, le libre mouvement pendulaire de la plateforme de préhension est amorti par le moyen d'amortissement et d'actionnement 8.

L'amortissement de ce mouvement relatif offre l'avantage de limiter les efforts sur le train avant de l'avion, et plus particulièrement lorsqu'une décélération du convoi composé de l'avion et du tracteur tractant l'avion se produit, suite à une force de freinage induite par l'avion. Les décélérations sont alors transmises de l'avion vers le tracteur par le biais du train avant de l'avion qui est solidaire avec la plateforme de préhension. Le moyen d'amortissement et d'actionnement 8 permet d'amortir les efforts sur le train avant de l'avion, et ainsi d'augmenter la vitesse moyenne de roulement du tracteur lorsque celui-ci tracte un avion. Ainsi, le moyen d'amortissement et d'actionnement 8 contribue à améliorer et à accélérer le transport de l'avion vers sa piste d'envol, tout en limitant les efforts sur le train avant de l'avion et une fatigue prématurée du train avant.

En pratique, le moyen d'amortissement et d'actionnement 8 peut être un vérin hydraulique.

La FIG. 2 montre également que le tracteur comprend au moins un portillon 6 destiné à s'opposer à une force exercée sur au moins une roue du train avant de l'avion par la plateforme de préhension. En effet, durant l'opération de chargement du train avant de l'avion sur la plateforme, la plateforme 20 est glissée sous les roues de l'avion. Et en dépit du fait que les roues peuvent tourner librement, les frottements induits par le glissement de la plateforme de préhension sous les roues sont importants, et une force importante est exercée sur le train avant de l'avion. Ainsi, sous l'effet du déplacement de la plateforme de préhension et de son contact avec les roues du train avant, celui-ci est poussé dans une direction semblable à celle du déplacement de la plateforme, ce qui induit des efforts pouvant conduire à une fatigue anticipée du train avant de l'avion. Afin de limiter ces effets sur le train avant, les portillons 6, articulés autour d'un axe de rotation vertical, se referment derrière les roues du train avant de manière à constituer un appui permettant de s'opposer au déplacement de ce dernier. Les roues sont donc en contact d'un côté avec les portillons 6, et de l'autre côté en contact avec la plateforme 20 qui se glisse sous elles.

La plateforme de préhension 20 peut disposer en outre d'un dispositif de verrouillage d'au moins une roue du train avant de l'avion. Un tel dispositif vise à empêcher tout décrochage du train avant de l'avion chargé sur le tracteur et à transmettre les efforts de traction. Le dispositif de verrouillage de ladite roue comprend notamment une butée de roue 26 du train avant de l'avion et un dispositif de serrage (22, 23, 24,) pour maintenir la roue du train avant de l'avion contre la butée.

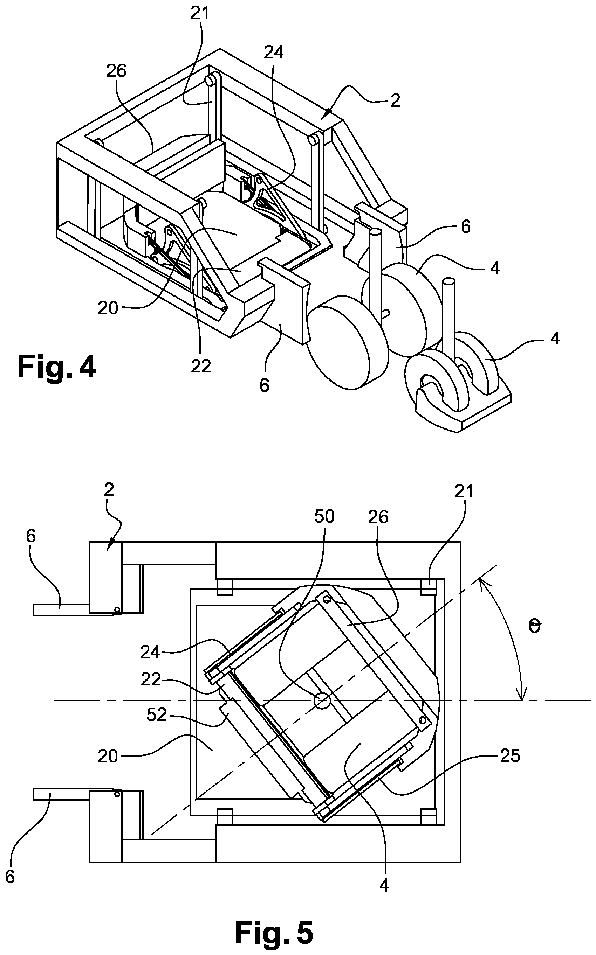

Le dispositif de verrouillage de ladite roue du train avant peut être installé sur une tourelle disposée sur la plateforme de préhension. La tourelle peut être libre en rotation par rapport à la plateforme de préhension autour d'un axe de rotation sensiblement perpendiculaire à la plateforme de préhension et sensiblement vertical. La FIG. 5 montre le dispositif de verrouillage qui est disposé sur une tourelle 52 qui est en libre rotation autour d'un axe de rotation 50 sensiblement vertical à la plateforme 20.

La butée de roue 26 du train avant de l'avion est destinée à arrêter la progression de la roue du train de l'avion lorsque la plateforme de préhension est glissée sous la roue. La butée peut avoir diverses formes. Elle peut par exemple avoir la forme générale d'une plaque suffisamment large pour être en contact avec les deux roues du train avant 4, comme représenté sur la FIG. 3. D'autres formes sont envisageables : la butée 26 peut avoir la forme générale d'une pelle, augmentant ainsi la surface de contact avec la roue du train avant de l'avion.

La butée présente un emplacement réglable afin que son positionnement soit adapté en fonction du type d'avion et/ou du type de roue. En effet, le diamètre des roues du train avant d'un avion peut varier d'un modèle d'avion à un autre, de sorte que la zone de contact de la roue sur la plateforme de préhension varie en fonction du diamètre de la roue et l'emplacement de la butée. Avantageusement, l'emplacement de la butée peut être réglé afin de la placer correctement sur le dispositif de verrouillage de la roue du train avant de l'avion. De plus, un réglage correct de l'emplacement de la butée permet d'ajuster la coïncidence entre l'axe de rotation de la roue du train avant de l'avion et l'axe de rotation de la tourelle. Ceci améliore notablement la transmission de la rotation du train avant vers la tourelle.

Le dispositif de serrage maintient la roue 4 du train avant de l'avion contre la butée, comme montré sur la FIG. 2. Ce maintien est assuré par une plaque de serrage 22 reliée un triangle 24 actionné par un vérin 23. En pratique, le dispositif de serrage comprend deux triangles, deux vérins, qui sont disposés de part et d'autre de la plaque de serrage 22. Dans la suite de la description, seul un côté du dispositif de serrage est décrit.

La plaque de serrage 22, lorsqu'elle est actionnée par le vérin 23, vient en contact contre la roue du train avant de l'avion, qui elle-même est en contact avec la butée 26. Le vérin 23 relie des éléments positionnés sur la plateforme sans aucun lien avec le châssis. La plaque de serrage 22 vient donc enserrer la roue en appliquant une force principalement dirigée en direction de la butée. Cette force appliquée par la plaque de serrage 22 peut également être sensiblement dirigée vers la plateforme.

Le dispositif de serrage peut comprendre, outre la plaque de serrage 22 reliée au triangle 24 actionné par le vérin 23, une biellette 25. En pratique, le dispositif comprend deux biellettes ; un pour chaque couple vérin/triangle.

L'ensemble de ces éléments 22, 23, 24, 25 est agencé comme le montre la FIG. 2. Un premier sommet 240 du triangle 24 est relié à la plateforme par une liaison pivot. Lorsque le dispositif de verrouillage est installé sur une tourelle, le triangle 24 peut être relié à la tourelle afin de ne pas entraver sa rotation. Le vérin 23 est relié à un deuxième sommet 242 du triangle 24 par une liaison rotule. Le troisième sommet 244 du triangle 24 est relié plaque de serrage 22 via une liaison pivot. De préférence, la liaison pivot entre le troisième sommet 244 et la plaque de serrage 22 est en position médiane d'un côté de la plaque 22, alors que la biellette 25 est reliée à l'une des extrémités 220 du côté de la plaque 22 d'un côté, et à la plateforme de l'autre côté. Lorsque le vérin 23 se rétracte, le triangle 24 pivote autour de son premier sommet 240, de telle sorte que le troisième sommet du triangle 24 s'élève, entraînant avec lui la plaque 22. Simultanément, la biellette 25 agit sur l'extrémité 220 de la plaque de serrage 22, ce qui entraîne une rotation de la plaque de serrage 22. Cette rotation permet le passage d'une position sensiblement horizontale de la plaque de serrage à une position au moins verticale dans laquelle la surface la plus importante de la plaque 22 est en contact avec la roue du train avant de l'avion. De manière avantageuse, la plaque de serrage vient au contact des roues 4 quel que soit le diamètre de la roue de l'avion chargé.

La plaque de serrage 22 peut être escamotable dans la plateforme grâce à la rotation de la plaque de serrage 22 entraînée par la biellette 25. La plaque de serrage 22 vient alors se placer dans un logement prévu dans la plateforme à cet effet. De manière alternative, la plaque de serrage 22 peut constituer une rampe d'accès à la plateforme. La plaque de serrage 22 est alors suffisamment longue pour venir en contact du sol lorsqu'elle est pivotée par la biellette 25. En d'autres termes, la plaque de serrage 22 est adaptée pour pivoter d'une position haute dans laquelle la plaque de serrage est au contact des roues 4 vers une position basse dans laquelle une extrémité de la plaque de serrage est en contact avec le sol. Dans une autre alternative, la plaque de serrage 22 peut à la fois être escamotable et constituer une rampe d'accès à la plateforme. La plaque de serrage, qu'elle soit escamotable et/ou qu'elle constitue une rampe d'accès, offre l'avantage de faciliter le roulement de la roue 4 en direction de la butée 26 puisque la plaque de serrage ne constitue pas un obstacle devant être franchi par la roue.

En pratique, le vérin 23, qui actionne le dispositif de serrage, est un vérin hydraulique. En effet, l'utilisation d'un vérin hydraulique présente l'avantage de permettre de libérer l'avion rapidement lorsque le tracteur est en panne. En particulier, le dispositif de serrage peut facilement passer d'une position serrée (c'est-à-dire que la plaque de serrage exerce une force coercitive contre la roue de l'avion) à une position desserrée. Il suffit pour cela de vidanger le vérin qui se détend, en conséquence de quoi la plaque de serrage s'escamote dans la plateforme, ce qui permet de facilement dégager la roue du train avant de l'avion.

Les FIGS. 3 et 4 montrent respectivement le dispositif de verrouillage en position serrée et desserrée. La FIG. 4 en particulier montre la plaque de serrage 22 qui est escamotée dans la plateforme 20.

La FIG. 5 montre le dispositif de verrouillage identique à celui des FIGS. 3 et 4, mais qui est cette fois installé sur une tourelle 52 disposée sur la plateforme de préhension 20.

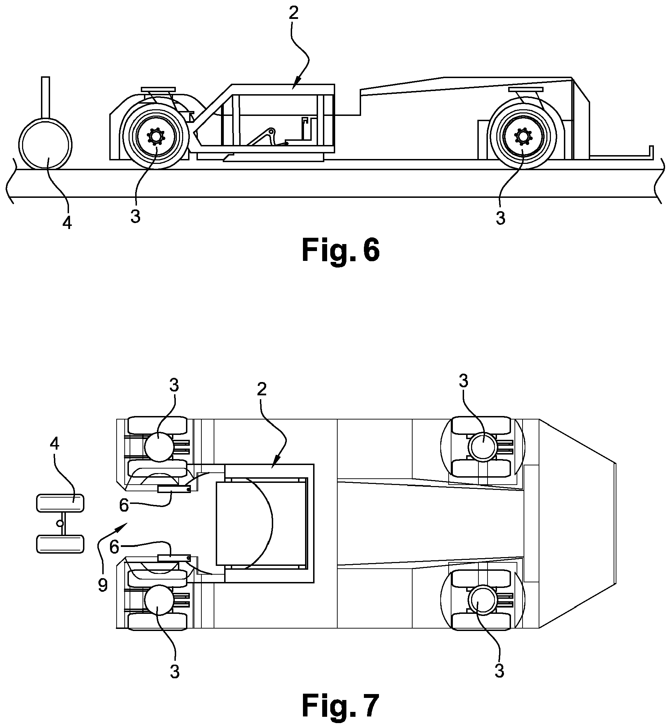

Les FIGS. 6-23 montrent les étapes successives d'un procédé de préhension du train avant d'un avion.

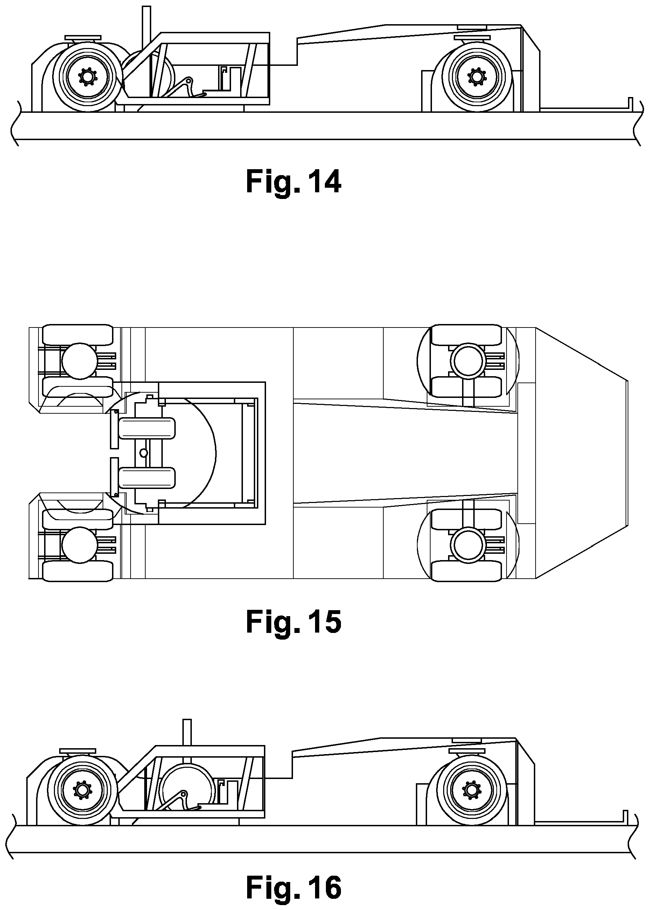

La FIG. 6 montre une configuration de départ, la FIG. 7 montre une vue de dessus de la FIG. 6. L'avion est stationné et ses moteurs sont éteints. Ses freins principaux sont bloqués, c'est-à-dire que les freins de ses trains arrière sont appliqués tandis que les roues du train avant sont libres. Le tracteur est à proximité de l'avion. La plateforme de préhension du tracteur est dans une position d'équilibre. La position d'équilibre de la plateforme de préhension correspond à la position la plus basse de celle-ci par rapport au châssis. En pratique, le moyen d'amortissement et d'actionnement 8 qui relie la plateforme de préhension et le châssis n'exerce aucune force sur la plateforme. La FIG. 7 montre en particulier que les portillons 6, disposés de part et d'autre de l'ouverture 9 permettant le passage de l'avant train de l'avion, sont en position ouverte. Dans cette configuration de départ, la butée 26 est positionnée en fonction du type d'avion et/ou du type de pneu que le tracteur va devoir charger. De manière alternative, le positionnement de la butée 26 peut être réalisé à l'étape représentée aux FIGS. 14 et 16.

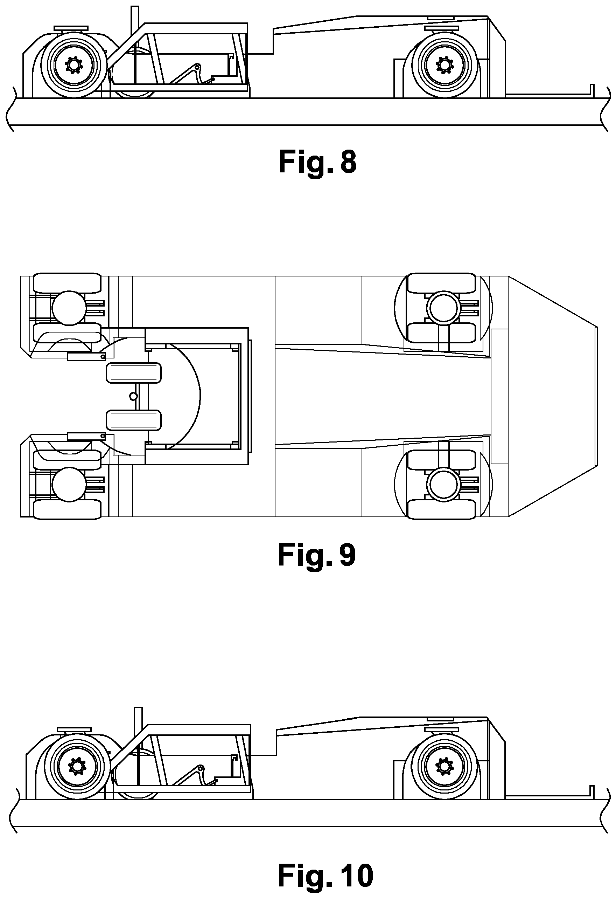

Ensuite, la plateforme de préhension du tracteur passe d'une position d'équilibre à une position rétractée. La plateforme de préhension passe dans la position rétractée suite à l'actionnement du moyen d'amortissement et d'actionnement qui relie la plateforme de préhension et le châssis. La position rétractée est la position dans laquelle se trouve la plateforme de préhension après avoir été translatée dans la direction opposée à l'ouverture 9 permettant le passage du train avant de l'avion. Une fois que la plateforme de préhension a atteint sa position rétractée, ou de manière simultanée, le châssis du tracteur descend en réponse à l'actionnement des actionneurs de chacun des modules de roues. Dans la FIG. 8, tous les modules de roues ont contribué à faire descendre le châssis, mais on pourrait envisager de ne descendre que l'arrière du tracteur. La descente du châssis est arrêtée lorsque la plateforme de préhension atteint une distance prédéterminée du sol, potentiellement jusqu'au contact au sol. Le tracteur est ensuite conduit de manière à ce que la plateforme de préhension arrive au contact des roues du train avant de l'avion, comme le montre la FIG. 9 qui correspond à une vue de dessus de la FIG. 8.

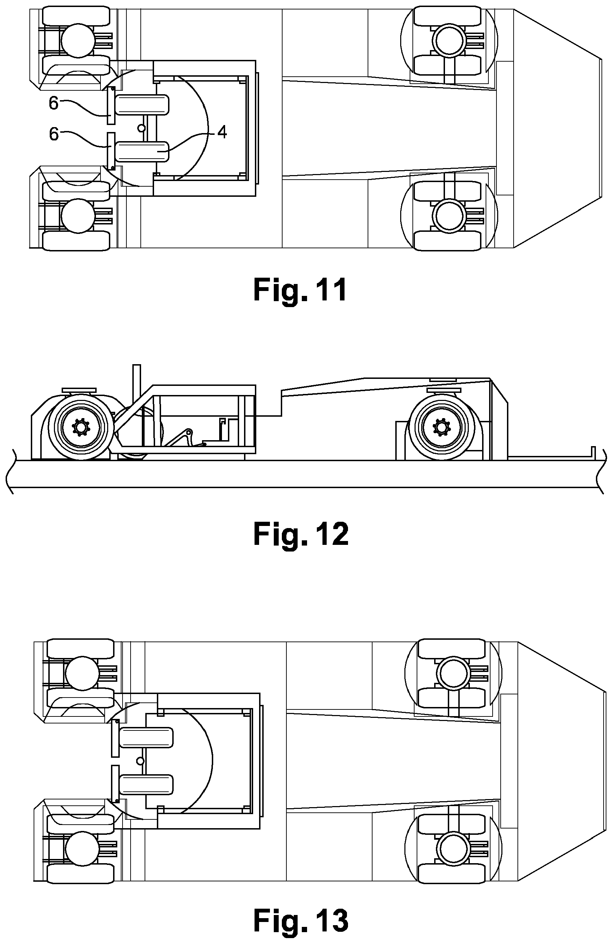

La prochaine étape est représentée sur les FIGS. 10 et 11, la FIG. 11 étant une vue de dessus de la FIG. 10. Cette étape consiste à refermer les portillons 6 de manière à ce qu'ils soient placés de part et d'autre du train avant de l'avion, à l'opposé de la plateforme.

L'étape suivante est représentée sur les FIGS. 12 et 13, la FIG. 13 étant une vue de dessus de la FIG. 12. Le moyen d'amortissement et d'actionnement qui relie la plateforme de préhension et le châssis est actionné de manière à déplacer la plateforme vers une position de préhension. La position de préhension est la position dans laquelle se trouve la plateforme de préhension après avoir été translatée en direction de l'ouverture permettant le passage du train avant de l'avion. Lors du déplacement de la plateforme de préhension de sa position rétractée vers sa position de préhension, la hauteur du châssis est ajustée par au moins deux modules de roues afin de permettre le passage d'une position à l'autre. En effet, la plateforme de préhension est mobile en translation sensiblement circulaire par rapport au châssis, impliquant qu'elle passe par sa position d'équilibre qui est sa position la plus basse. Sur la FIG. 12, tous les modules de roues participent à l'ajustement de la hauteur du châssis. Durant cette étape, la plateforme de préhension se glisse sous les roues du train avant de l'avion. Les portillons ayant été refermés à l'étape précédente, les roues du train avant sont en contact d'un côté avec les portillons, et de l'autre côté en contact avec la plateforme qui se glisse sous elles, les pneus roulant sur la plateforme. Afin de limiter les frottements des roues contre les portillons, ces derniers peuvent comporter des rouleaux disposés horizontalement qui sont libres en rotation.

Les FIGS. 14 et 15 montrent que les roues de l'avion ont commencé à monter sur la plateforme de préhension pendant le déplacement de la plateforme de la position rétractée à la position de préhension.

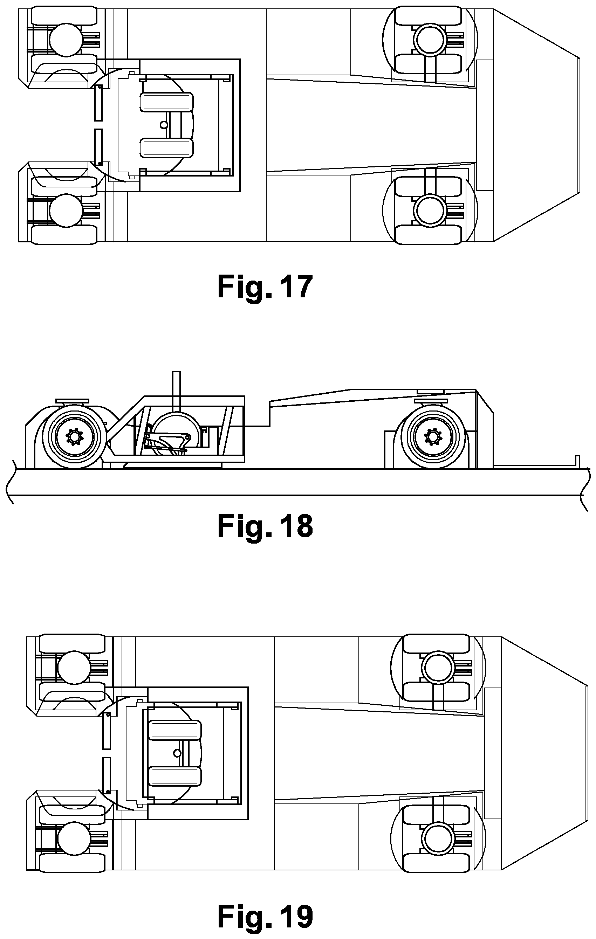

Les FIGS. 16 et 17 montrent les roues de l'avion qui sont disposées contre la butée et sur le dispositif de verrouillage. Si besoin est, le tracteur recule pour permettre aux roues du train avant de l'avion d'être effectivement placées contre la butée et sur le dispositif de verrouillage. La plateforme étant horizontale, c'est-à-dire parallèle au sol, il n'y a pas d'effort sur le train avant de l'avion qui roule sur la plateforme, ce qui est bénéfique et préserve le train avant.

Les FIGS. 18 et 19 montrent l'étape suivante qui consiste à verrouiller le système de verrouillage des roues de l'avion, comme décrit plus haut en référence à la FIG. 2.

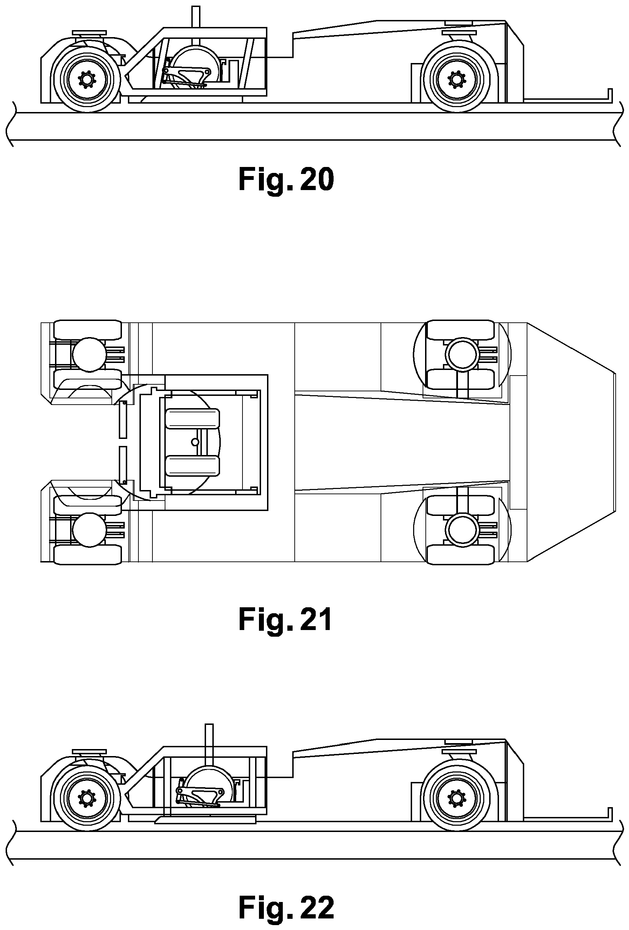

Ensuite, le châssis du tracteur est remonté en réponse à l'actionnement des actionneurs de chacun des modules de roues. Sur les FIGS. 20 et 21, tous les modules de roues ont monté. A ce stade, la plateforme de préhension est toujours en position de préhension.

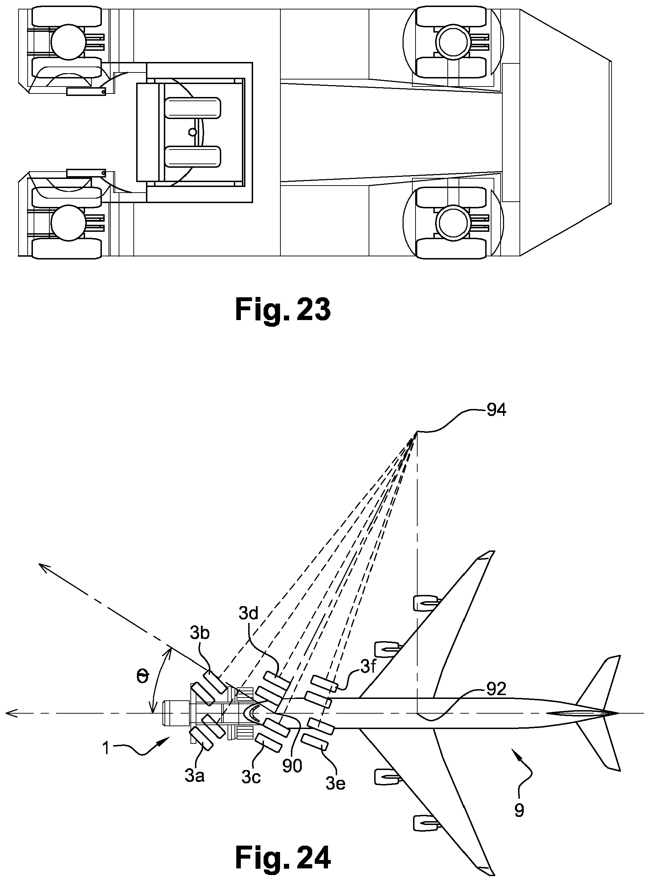

Enfin, comme le montrent les FIGS. 22 et 23, la plateforme de préhension est mise en position d'équilibre et les portillons sont ouverts. Le tracteur peut maintenant tracter l'avion.

Lorsque la plateforme de préhension est mise en position d'équilibre, elle peut en outre être inclinée par rapport au plan horizontal si nécessaire, avant que le tracteur ne commence à rouler. Cette fonction est particulièrement utile dans le cas d'avions ayant une jambe de train avant 4 inclinée par rapport à la verticale. L'axe du train avant n'est donc pas perpendiculaire au plan horizontal. Or, lors d'une action du pilote de l'avion sur sa direction, les pneus doivent idéalement tourner sur un plan perpendiculaire à l'axe de la jambe de train 4. L'inclinaison de la plateforme de préhension 20 peut être assurée par tout moyen décrit plus haut, en agissant soit sur la longueur de certains tirants verticaux soit sur leurs points d'attache au châssis du tracteur.

L'opération de déchargement se fait de manière inverse de l'opération de chargement. Les freins de l'avion sont appliqués et l'avion est immobilisé.

Tout d'abord, la plateforme de préhension passe en position de préhension. Puis, le châssis du tracteur descend. Ensuite, le système de verrouillage des roues de l'avion est déverrouillé. Puis, la plateforme de préhension est amenée de la position de préhension vers la position de rétraction. La plateforme se retire au fur et à mesure de sorte que les roues du train avant de l'avion se dirigent hors de la plateforme de préhension. Le tracteur avance afin de totalement dégager les roues de l'avion qui est alors déchargé.

Il apparaît que le tracteur d'avion présente de nombreux avantages. Tout d'abord, le fonctionnement du dispositif de préhension du tracteur est simple et ne requiert qu'un nombre limité d'actionneurs. En particulier, le moyen d'amortissement et d'actionnement facilite le chargement de l'avion, mais il permet également d'effectuer la traction de l'avion à vitesse élevée puisqu'il amortit les variations de vitesse du tracteur par rapport à l'avion, ce dernier n'ayant à freiner que sa propre masse.

Ensuite, le tracteur est tolérant aux pannes en ce sens qu'une panne du tracteur n'empêche pas de décharger l'avion. En effet, les actionneurs sont disposés de sorte que rien ne s'oppose au retrait du train avant de l'avion de la plateforme. En particulier, les actionneurs peuvent être des vérins hydrauliques, ce qui facilite le déplacement d'éléments en cas de panne du tracteur. Par exemple, la plateforme de préhension peut être abaissée au niveau du sol en vidangeant les chambres de compression des vérins. Par simple gravité, le châssis du tracteur s'abaisse. De manière similaire, la roue du train avant peut être sortie du dispositif de verrouillage en vidant les chambres de compressions des vérins hydrauliques du dispositif de verrouillage. De plus, la plaque de serrage peut s'escamoter dans la plateforme, ce qui facilite d'autant plus le roulement du train avant hors de la plateforme de préhension. Ainsi, le tracteur selon l'invention permet de décharger l'avion dans un laps de temps de l'ordre de quelques minutes, même en cas de panne, sans aucun apport d'énergie autre que celui nécessaire à la translation ; par exemple, un autre véhicule peut venir tracter le tracteur en panne.

L' objet de l'invention est de proposer un procédé pour tracter un avion. Le document WO/2008/139440, cité plus haut, présente un tracteur d'avion destiné à des opérations de « taxiing ». Ce document décrit un système dans lequel un signal de transfert est fournit au tracteur en réponse à un mouvement d'un composant de commande de l'avion. Notamment le système décrit dans ce document comporte un support pivotant (tourelle) destiné à recevoir le train avant de l'avion et permettant le transfert de commandes de direction du pilote vers le tracteur. Le système décrit dans ce document comprend aussi un absorbeur de choc permettant le transfert de commandes de freinage du pilote vers le tracteur. Cependant, le système décrit dans ce document comprend un système de préhension du train avant de l'avion complexe, tant pour le chargement du train sur le tracteur que pour le déchargement. Le procédé de l'invention propose d'utiliser un tracteur tel que décrit en référence aux figures 1 à 5 pour tracter l'avion. Le tracteur de l'invention comprend une plateforme de préhension ayant avec le châssis une liberté en translation sensiblement circulaire et reliée à celui-ci par un amortisseur - actionneur. Le tracteur de l'invention permet bien un chargement et déchargement rapide du train avant de l'avion, tel que cela a été décrit plus haut, et permet également de tracter l'avion vers la piste de décollage.

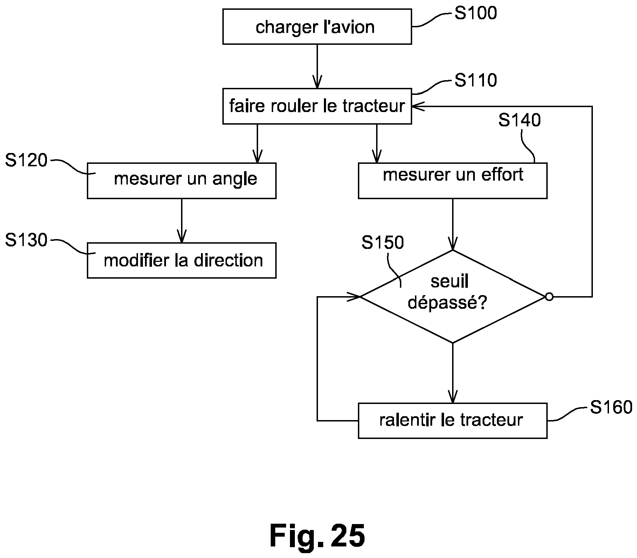

Les étapes de ce procédé de taxiing sont représentées sur la FIG. 25. Durant la phase où le tracteur tracte l'avion, c'est à dire après avoir chargé l'avion sur le tracteur, le pilote de l'avion commande le freinage du convoi composé de l'avion et du tracteur tractant l'avion. Pour cela, le pilote peut diminuer la vitesse du convoi grâce au freinage de l'avion, et augmenter la vitesse du convoi en diminuant le freinage de l'avion ; le tracteur gérant l'accélération du convoi. De plus, le pilote commande la direction du convoi.

La première étape consiste à charger l'avion sur le tracteur (S100).

Après que l'avion ait été chargé, le tracteur commence à rouler. Pour que le tracteur puisse se mettre à rouler, le pilote desserre les freins principaux de l'avion. La force de résistance de l'avion est alors inférieure à la force de traction du tracteur qui peut alors rouler. Le tracteur exerce une force de traction suffisante qui permet de mouvoir l'avion. Le tracteur accélère jusqu'à ce qu'il atteigne une vitesse de croisière constante (S110). Par exemple, lorsque l'avion doit être transporté vers sa piste d'envol, la vitesse de croisière peut être de 20 noeuds, environ 37 km/h.

La vitesse du tracteur doit cependant être régulée ; par exemple, le pilote doit pouvoir arrêter le tracteur au niveau d'un croisement. Pour cela, le procédé pour tracter un avion contrôle la vitesse du tracteur en fonction de l'effort de traction mesuré par le moyen d'amortissement et d'actionnement (S140). En effet, le moyen d'amortissement et d'actionnement met en relation la plateforme de préhension avec le châssis, de sorte que la force de traction apparaissant pendant la traction de l'avion peut être mesurée par le moyen d'amortissement et d'actionnement. Ainsi, lorsque le pilote de l'avion freine, cela a pour conséquence que la force de traction mesurée augmente.

La force mesurée est ensuite comparée à un niveau de seuil dynamiquement déterminé de manière à tester si oui ou non le niveau de seuil est dépassé (S150). Le niveau de seuil est déterminé en temps réel en fonction de paramètres extrinsèques au convoi tels que la vitesse du vent, la pente du plan de roulage, et de paramètres intrinsèques au convoi tel que le type d'avion ou le modèle d'avion qui est tracté. D'autres paramètres peuvent intervenir lors de la détermination en temps réel du niveau de seuil. Tant que ce niveau de seuil dynamiquement déterminé n'est pas dépassé, le tracteur continu de rouler. Au contraire, si ce niveau de seuil dynamiquement déterminé est dépassé, alors la vitesse du tracteur est réduite (S160). La vitesse du tracteur est réduite tant que l'effort mesuré par le moyen d'amortissement et d'actionnement dépasse le niveau de seuil dynamiquement déterminé. Au contraire, la vitesse du tracteur augmente jusqu'à atteindre la vitesse de croisière lorsque l'effort mesuré par le moyen d'amortissement et d'actionnement est à nouveau en dessous du niveau de seuil. Ainsi, le train avant ne subit qu'un effort de traction unidirectionnel et aucun effort de poussée lors du freinage. Les constructeurs d'avion considèrent que les efforts sont suffisamment maîtrisés pour permettre de tracter l'avion sans risque d'endommager le train avant de l'avion.

En pratique, le moyen d'amortissement et d'actionnement peut être un vérin hydraulique qui comporte au moins un capteur apte à mesurer un effort.

En parallèle du contrôle de la vitesse du tracteur, sa direction est modifiée par le pilote en fonction de la rotation de la tourelle par rapport à la plateforme de préhension. La rotation de la tourelle peut en effet être induite par un mouvement de rotation du train avant de l'avion. En effet, tout mouvement de rotation émis par le train avant de l'avion peut être accompagné et retranscrit par la tourelle, comme illustré sur la FIG. 24.

La FIG. 24 montre un convoi formé du tracteur 1 et de l'avion 9. L'avion 9 est chargé sur le tracteur 1. La butée a été réglée de manière à ce que l'axe de rotation de la roue du train avant de l'avion et l'axe de rotation de la tourelle coïncident et définissent un axe de rotation commun noté 90 sur la FIG. 24 La tourelle a effectué une rotation autour de l'axe de rotation 90 dans le sens horaire d'un angle θ représenté sur la FIG. 24. La tourelle comprend des moyens aptes à mesurer l'angle de rotation entre deux positions successives de la tourelle par rapport à la plateforme de préhension. Elle peut par exemple comporter au moins un capteur mesurant un déplacement angulaire de la tourelle par rapport à la plateforme de préhension. Ces mesures peuvent être employées pour modifier la direction du tracteur. La direction du tracteur est modifiée en effectuant une rotation des modules de roues du tracteur suivant un axe de rotation sensiblement vertical au châssis du tracteur. En particulier, la rotation de chaque module de roues lui est propre.

Le tracteur 1 représenté sur la FIG. 24 comprend six modules de roues (3a, 3b, 3c, 3d, 3e, 3f), et chaque module de roues présente un angle de rotation respectif. Le train avant de l'avion 9 a effectué une rotation d'un angle θ sur la tourelle de la plateforme de préhension du tracteur, de telle sorte que les roues du train avant de l'avion, si elles n'étaient pas chargées sur le tracteur, suivraient sur le plan de roulage un cercle de centre 94 et de rayon ayant pour longueur la distance comprise en le centre 94 et le point 92 situé sur l'avion. Chaque module de roue (3a, 3b, 3c, 3d, 3e, 3f) présente une rotation qui lui est propre et qui permet au tracteur de suivre la même direction qu'auraient suivie les roues du train avant de l'avion.

Il est particulièrement avantageux que chaque module de roues ait une la rotation qui lui est propre. En effet, le tracteur change de direction tout en limitant les risques de sous-virage et de survirage parasites, évitant des incidents graves où le tracteur se retrouverait en portefeuille par rapport à l'avion. L'axe longitudinal de l'avion est confondu avec l'axe longitudinal du tracteur, et ainsi il n'y a pas d'angle relatif entre l'avion et le tracteur lors d'un changement de direction.

De plus, le pilote conserve ses sensations de pilotage puisque l'avion se comporte comme si le train avant de l'avion roulait. Notamment, si l'avion présente une jambe de train avant 4 inclinée par rapport à la verticale, la plateforme de préhension 20 aura pu être inclinée comme décrit plus haut et les pneus tourneront sur un plan perpendiculaire à l'axe de la jambe de train 4.

De manière avantageuse, les commandes de rotation du train avant de l'avion donnés par le pilote peuvent être exécutés tout en ayant les roues du train avant sécurisées sur le dispositif de verrouillage et sans que cela ne nécessite une quelconque action sur le dispositif de verrouillage.

L'angle de rotation entre deux positions successives de la tourelle par rapport à la plateforme de préhension est mesuré (S120). L'angle de rotation mesuré permet d'estimer la direction que le pilote souhaite appliquer à l'avion. Les modules de roue du tracteur ont alors leurs orientations respectives qui sont modifiées (S130) de manière à retranscrire l'angle mesuré à l'étape précédente.

Durant la phase où l'avion est emmené vers la piste d'envol, le pilote dirige le tracteur de la même manière que si l'avion était propulsé par ses réacteurs. De manière avantageuse, le procédé pour tracter un avion selon l'invention ne requiert aucune modification de l'avion. De plus, les opérations telles qu'elles sont pratiquées lorsque l'avion se déplace grâce à ses moteurs ne sont pas modifiées. Enfin, le pilote conserve la responsabilité d'amener l'avion à la piste d'envol.

L'invention n'est pas limitée aux modes de réalisation décrits à titre d'exemple. Notamment, la contraction et la détente des vérins peuvent être inversées si les vérins sont positionnés différemment. En outre, les actionneurs peuvent être des actionneurs électriques contrôlés électroniquement. Le dispositif de verrouillage peut comprendre des éléments autres qu'une plaque, biellette, et triangle, tant que le serrage des roues du train avant de l'avion est assuré.

## Revendications

1. Procédé pour tracter un avion (9) au moyen d'un tracteur (1) d'avion (9), le tracteur comprenant un châssis et une plate-forme de préhension du train avant d'avion, le procédé comprenant les étapes de :
- bloquer les freins principaux de l'avion (9);
- saisir le train avant (4) de l'avion (9) au moyen d'un tracteur (1) après le blocage des freins principaux de l'avion (9);
- exercer une force de traction sur l'avion (9) au moyen du tracteur (1) avant de desserrer les freins principaux de l'avion;
- desserrer les freins principaux de l'avion (9), rendant ainsi une force de résistance de l'avion (9) inférieure à la force de traction du tracteur (1);
- permettre à la force de traction de mouvoir le tracteur (1) avec l'avion (9); et **caractérisé par** l'étape
- réguler la vitesse du tracteur en fonction de la force de traction mesurée (S140) par un moyen d'amortissement et d'actionnement reliant la plate-forme de préhension au châssis du tracteur.

2. Procédé pour tracter un avion (9) selon la revendication 1, dans lequel le desserrage des freins principaux de l'avion (9) est réalisé par le pilote de l'avion (9).

3. Procédé pour tracter un avion (9) selon l'une quelconque des revendications précédentes, comprenant en outre une étape d'accélération du tracteur (1) jusqu'à ce que le tracteur (1) atteigne une vitesse de croisière constante.

4. Procédé pour tracter un avion (9) selon l'une quelconque des revendications précédentes,, dans lequel la vitesse du tracteur (1) est réduite (S160) lorsque la force de traction mesurée dépasse (S150) un niveau de seuil dynamiquement déterminé.

5. Procédé pour tracter un avion (9) selon l'une quelconque des revendications précédentes, dans lequel la vitesse du tracteur (1) augmente lorsque la force de traction mesurée est en dessous d'un niveau de seuil dynamiquement déterminé.

## Patentansprüche

1. Verfahren zum Schleppen eines Flugzeugs (9) mithilfe eines Schleppfahrzeugs (1) für ein Flugzeug (9), wobei das Schleppfahrzeug ein Fahrgestell und eine Plattform zum Greifen des Bugfahrwerks des Flugzeugs umfasst, wobei das Verfahren die folgenden Schritte umfasst:
- Blockieren der Hauptbremsen des Flugzeugs (9);
- Ergreifen des Bugfahrwerks (4) des Flugzeugs (9) mithilfe eines Schleppers (1) nach der Blockierung der Hauptbremsen des Flugzeugs (9);
- Ausüben einer Zugkraft auf das Flugzeug (9) mithilfe des Schleppers (1) vor dem Lösen der Hauptbremsen des Flugzeugs;
- Lösen der Hauptbremsen des Flugzeugs (9), wodurch die Widerstandskraft des Flugzeugs (9) kleiner wird als die Zugkraft des Schleppers (1);
- Zulassen, dass die Zugkraft den Schlepper (1) mit dem Flugzeug (9) bewebt; und
**gekennzeichnet durch** den Schritt
- Regeln der Geschwindigkeit des Schleppers in Abhängigkeit von der gemessenen Zugkraft (S140) mit einer Dämpfungs- und Betätigungseinrichtung, die die Greifplattform mit dem Fahrgestell des Schleppers verbindet.

2. Verfahren zum Schleppen eines Flugzeugs (9) nach Anspruch 1, wobei das Lösen der Hauptbremsen des Flugzeugs (9) von dem Piloten des Flugzeugs (9) durchgeführt wird.

3. Verfahren zum Schleppen eines Flugzeugs (9) nach einem der vorhergehenden Ansprüche, ferner umfassend einen Schritt zur Beschleunigung des Schleppers (1) bis der Schlepper (1) eine konstante Fahrtgeschwindigkeit erreicht.

4. Verfahren zum Schleppen eines Flugzeugs (9) nach einem der vorhergehenden Ansprüche, wobei die Geschwindigkeit des Schleppers (1) reduziert wird (S160), wenn die gemessene Zugkraft ein dynamisch festgelegtes Schwellenniveau übersteigt(S150).

5. Verfahren zum Schleppen eines Flugzeugs (9) nach einem der vorhergehenden Ansprüche, wobei sich die Geschwindigkeit des Schleppers (1) erhöht, wenn die gemessene Zugkraft unterhalb eines dynamisch festgelegten Schwellenniveaus liegt.

## Claims

1. A method for pulling an airplane (9) by an airplane (9) tractor (1), the tractor comprising a chassis and a platform for gripping the airplane nose gear, the method comprising:
- blocking the primary brakes of the airplane (9);
- gripping a nose gear (4) of the airplane (9) by a tractor (1) after blocking the primary brakes of the airplane (9);
- exerting a pulling force on the airplane (9) by the tractor (1) prior to releasing the primary brakes of the airplane;
- releasing the primary brakes of the airplane (9), thereby causing a resistance force of the airplane (9) to be less than the pulling force of the tractor (1);
- allowing the pulling force to drive the tractor (1) together with the airplane (9); and
**characterized by** the step of:
- controlling the speed of the tractor as a function of the pulling force measured (S140) by a damping and operating means linking the gripping platform to the airplane tractor

2. The method for pulling an airplane (9) according to Claim 1, wherein releasing primary brakes of the airplane (9) is performed by the airplane's (9) pilot.

3. The method for pulling an airplane (9) according to any one of the preceding claims, further comprising accelerating the tractor (1) until the tractor (1) reaches a constant cruising speed.

4. The method for pulling an airplane (9) according to any one of the preceding claims, wherein the speed of the tractor (1) is reduced (S160) when the measured pulling force exceeds (S150) a dynamically determined threshold level.

5. The method for pulling an airplane (9) according to any one of the preceding claims, wherein the speed of the tractor (1) is increased when the measured pulling force falls below a dynamically determined threshold level.
